# FASCICULE DE BREVET EUROPEEN

(11) **EP 0 759 008 B1**
(45) Date de publication et mention de la délivrance du brevet: **20.06.2001**
(21) Numéro de dépôt: 94903925.9
(22) Date de dépôt: 29.12.1993
(51) Int. Cl.: B67D 3/02, G01F 11/32

(54) **DISTRIBUTEUR DE LIQUIDES**
FLÜSSIGKEITSSPENDER
LIQUID DISPENSER

(30) Priorité: 31.12.1992 FR 9216075
(43) Date de publication de la demande: 26.02.1997
(73) Titulaire: ANDRIUSSI, Francois, 06400 Cannes (FR)
(72) Inventeur: ANDRIUSSI, Francois, 06400 Cannes (FR)
(86) Numéro de dépôt international: FR9301313
(87) Numéro de publication internationale: WO9415872

(56) Documents cités:
- EP-A- 0 236 693
- EP-A- 0 290 294
- FR-A- 2 484 086
- GB-A- 2 152 477
- GB-A- 2 169 584
- GB-A- 2 194 509
- GB-A- 2 240 763
- US-A- 4 210 262

## Description

La présente invention concerne un appareil destiné à distribuer des volumes de liquide prédéterminés, comme, par exemple, les doses de spiritueux composant les boissons vendues dans les bars, cafés ou restaurants.

De tels distributeurs sont connus et se présentent sous la forme de capacités calibrées, alternativement remplies depuis un flacon contenant le liquide,et vidées dans les verres ou autres récipients, par une action manuelle consistant à soulever un jeu de clapets permettant le vidage de la dite capacité. Sous la forme la plus répandue, cette action se fait en utilisant le bord du verre pour soulever une barrette ou un croisillon lié aux clapets de vidange, voir par exemple GB-A-194509.

De nouvelles directives visant à limiter la transmission des maladies contagieuses ne permettent théoriquement plus d'employer un tel système, le bord des verres ne devant plus être mis en contact avec des éléments suceptibles d'être souillés. Dans ce but, de nouveaux appareils ont été réalisés où le vidage des capacités est provoqué grâce à un levier manoeuvré par la main qui ne tient pas le verre.

Cette manoeuvre interdit aux serveurs de tenir des verres dans chaque main, ce qui, en période de presse, est un handicap.

La présente invention a pour but de permettre le remplissage et le vidage de capacités calibrées sans aucun contact, ni manuel, ni par l'intermédiaire du verre.

Dans ce but, et conformément à l'invention, les différentes étapes du cycle de fonctionnement sont réalisées par un appareil selon la revendication 1 avec un moteur électrique dont les séquences sont déclenchées par un organe de détection à distance activé par l'approche, sans contact, du verre ou de tout autre récipient destiné à recueillir le liquide.

L'appareil est relié, en amont, au flacon contenant le liquide à distribuer, par un conduit menant à une cavité de volume prédéterminé, lequel conduit est associé à un organe mobile pouvant interrompre la communication entre la cavité et le flacon. La cavité est aussi raccordée à un conduit d'évacuation également associé à un obturateur mobile pouvant établir ou interrompre la liaison. Le remplissage de la cavité est facilité par un conduit permettant à l'air contenu lorsqu'elle est vide de liquide de remonter dans le flacon pour prendre la place du liquide qui s'en échappe. Ce troisième conduit est associé à un organe mobile permettant d'assurer ou d'interrompre sa continuité. De même, le vidage de la cavité est facilité par l'introduction d'air extérieur dont le passage est alors autorisé par un obturateur mobile commandé.

Les organes mobiles sont manoeuvrés, avec le synchronisme convenable, par un ensemble moteur, de préférence électrique, dont la mise en route est déclenchée par l'activation d'un organe de détection tel qu' une cellule photoélectrique sensible à la proximité sans contact d'un corps solide, par exemple un verre ou un gobelet. Lorsque le cycle de vidage est terminé, un dispositif qui peut être un contact électrique actionné par un élément mécanique, magnétique, ou optique, arrête le moteur dans une position où tous les organes de l'appareil sont dans la position qu'ils occupaient au départ et permettant le remplissage de la cavité calibrée.

L'ensemble des organes électriques de commande peut avantageusement faire appel à un microprocesseur électronique permettant d'inclure dans le cycle des fonctions annexes comme par exemple une temporisation interdisant un nouveau démarrage avant un temps défini permettant le remplissage correct et complet de la cavité calibrée. Il peut également commander des signaux lumineux renseignant l'opérateur sur la séquence du cycle en cours. Enfin, il est possible de générer un signal électrique vers un recepteur qui peut être un compteur ou une caisse enregistreuse dans le but de comptabiliser les cycles et de contrôler le débit du liquide distribué.

Diverses autres caractéristiques et avantages de l'invention ressortent de la description détaillée qui suit.

Une forme de réalisation de l'objet de l'invention est représentée, à titre d'exemple non limitatif, sur le dessin annexé.

Sur ce dessin :
- La figure 1 est une élévation en coupe d'un appareil conforme à l'invention représenté dans la position de remplissage et d'attente.
- La figure 2 est une élévation du même appareil représenté dans la position intermédiaire permettant le vidage de la capacité calibrée, celle-ci étant alors isolée du flacon contenant le liquide à distribuer.
- La figure 3 représente une variante de réalisation dans laquelle la proximité du verre ou du gobelet est détectée par coupure d'un faisceau incident.

L'appareil représenté sur le dessin comprend un corps principal 1 dont la partie supérieure est équipée d'un embout destiné à assurer la communication étanche avec le flacon 2 contenant le liquide à distribuer. Le conduit interne 3 aboutit à une chambre 4 disposée à sa base, qui lui est sensiblement perpendiculaire, et qui s'étend jusqu'à l'intersection avec une cheminée 5 sensiblement parallèle au conduit de départ 3. Une autre chambre 6, disposée au dessus de la chambre 4, également perpendiculaire à la cheminée 5, met celle-ci en communication avec la face avant du corps 1 dans la zone fermée par le couvercle 7, et définissant ainsi une capacité 8 de volume connu et constant. La cheminée 5 se prolonge vers le bas par un embout 9 destiné à l'évacuation du liquide préalablement introduit dans la capacité 8 par la chambre 9a.

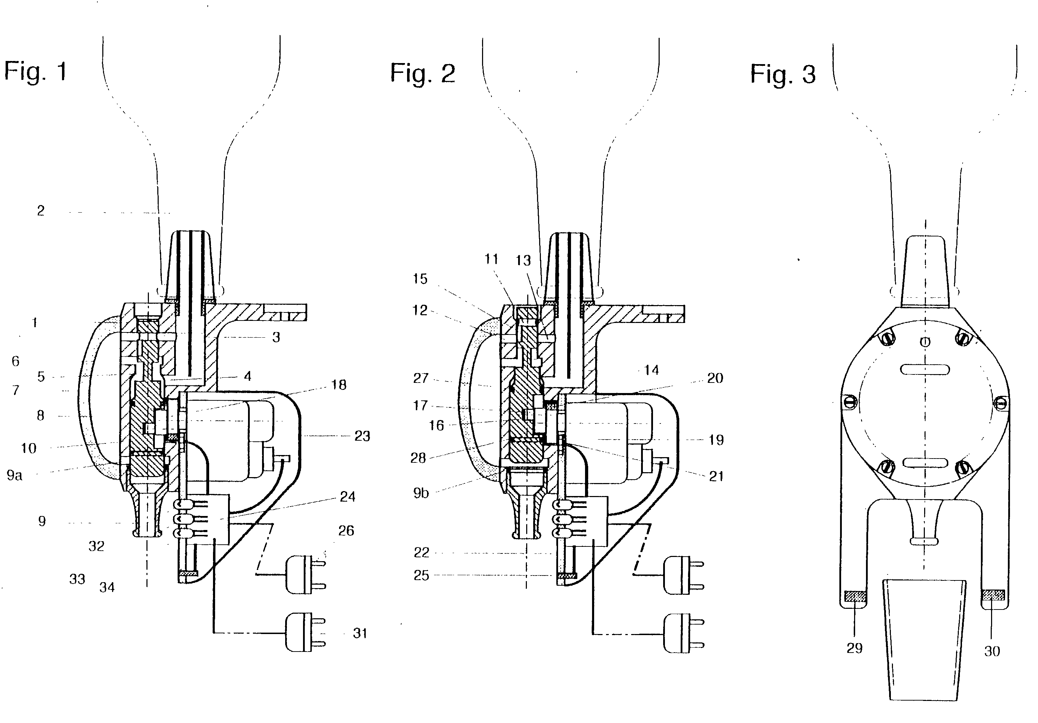

Dans la cheminée 5 circule un tiroir 10 agencé de manière que dans sa position basse représentée figure 1, l'embout d'évacuation 9 soit obturé, l'étancheité étant assurée par un joint 9b disposé entre l'embout 9 et la base du corps 1, alors que la chambre 4 est mise en communication avec la chambre 6 et communique donc avec la capacité 8 qui peut se remplir sans que le liquide ne s'écoule par le bas. Dans cette position, un passage 11 aménagé dans le tiroir 10 met en communication deux conduits 12 et 13, situés de part et d'autre de la cheminée 5, le conduit 12 s'étendant jusqu'au sommet de la capacité 8, et le conduit 13 aboutissant dans le conduit de départ 3 partagé par une cloison centrale 14. Cette disposition permet à l'air contenu dans la capacité 8 de remonter jusqu'au flacon 2 et de prendre la place du liquide qui s'en écoule jusqu'au complet remplissage de la cavité 8.

La figure 2 représente le même appareil dans une disposition du tiroir 10 supprimant la communication entre les chambres 4 et 6, ainsi qu'entre les conduits 12 et 13, mais dégageant l'embout 9 permettant le vidage de la capacité 8. Pour faciliter et accélérer le vidage, un passage 15 est aménagé dans la partie haute du tiroir 10 de façon à autoriser l'entrée de l'air extérieur qui viendra prendre la place du liquide évacué.

Une rainure 16 est aménagée dans le tiroir 10 sensiblement perpendiculaire à son axe principal, qui coopère avec le doigt 17 disposé de façon excentrée sur le rotor 18 entraîné mécaniquement par le motoréducteur 19. Ce même rotor reçoit un aimant 20 également disposé de façon excentrée, de manière à passer cycliquement devant le détecteur 21 sensible au champ magnétique comme par exemple une cellule à effet Hall, ou un interrupteur Reed à lames magnétiques.

Le motoréducteur est fixé sur le corps 1 par une platine 22 et protégé par un capot 23 qui abrite également le bloc de commande 24.

Lorsque le détecteur 25 qui peut être une cellule photoélectrique combinant émetteur et récepteur, ou un dispositif à ultrasons, est à proximité d'un corps solide comme un verre ou un gobelet, il génère un signal transmis au bloc de commande 24 qui est agencé pour piloter les mouvements du moteur 19.

Les joints 27 et 28 disposés sur le tiroir 10 de part et d'autre de la rainure 16 empêchent tout passage de liquide vers la zône du moteur 19 et du bloc 24.

L'alimentation électrique est assurée par une fiche 26 qui doit être raccordée à une source d'énergie convenable.

Le bloc de commande 24 peut emettre un signal à chaque cycle grâce à la prise 31 qui peut être raccordée à un compteur totalisateur.

Le fonctionnement de l'appareil conforme à l'invention est le suivant :

La position d'attente stable, cavité 8 pleine de liquide, est celle représentée par la figure 1, la fiche 26 étant raccordée à une source de courant convenable.

Lorsque un corps solide comme un verre ou un gobelet est amené à proximité du détecteur 25, celui-ci envoie un signal reçu par le bloc de commande 24.

Si le signal est maintenu pendant un temps défini, par exemple 250 millisecondes, pour se mettre à l'abri d'un déclenchement intempestif dû, par exemple au passage d'un insecte, le motoréducteur 19 démarre, entraînant le rotor 18 dont le doigt 17 pousse le tiroir 10 vers le haut.

Dans un premier temps de ce mouvement, le tiroir va obturer la partie de la cheminée 5 située entre les chambres 4 et 6, ainsi que l'extrémité du conduit 13. En poursuivant son mouvement ascendant, le tiroir 10 découvre l'embout de sortie 9 ainsi que le passage 15. Le liquide contenu dans la cavité 8 passant par la chambre 9a commence à se vider par gravité, l'air extérieur entrant par le passage 15.

Lorsque le tiroir 10 est sensiblement à son point le plus haut, c'est-à-dire quand le rotor 18 à fait sensiblement un demi-tour, le bloc de commande 24 stoppe le motoréducteur pendant quelques instants, par exemple 500 millisecondes, pour permettre le complet vidage de la cavité 8, puis le remet en route jusqu'à ce que l'aimant 20 excite le détecteur 21 qui, par son signal au bloc de commande 24 entraîne l'arrêt du motoréducteur revenu à sa position de départ. Ce second demi-tour du rotor fait redescendre le tiroir 10 qui décrit le cycle inverse avec d'abord la fermeture de l'embout 9 et du passage 15, puis l'ouverture de la communication entre les chambres 4 et 6 et l'ouverture du conduit 13. Le liquide contenu dans le flacon s'écoule alors dans la cavité 8, l'air s'échappe par le haut de la cavité et remonte dans le flacon par les conduits 12, 11, 13 et 3, guidé et séparé du liquide par la cloison 14 jusqu'au complet remplissage de la cavité 8.

Une temporisation est incluse à la fin du cycle, après le signal envoyé par le détecteur 21, retardant le démarrage d'un nouveau cycle pour permettre le complet remplissage de la cavité.

De même, le microprocesseur et la mémoire contenus dans le bloc de commande 24 sont progammés pour que le démarrage d'un nouveau cycle ne soit possible qu'après avoir retiré le verre ou le gobelet, et qu'un autre soit présenté à nouveau à proximité du détecteur 25. Le bloc de commande 24 pilote également l'allumage et l'extinction des lampes 32, 33 et 34 qui représentent l'avancement des séquences du cycle.

On peut ainsi visualiser :
- La mise sous tension de l'appareil.
- La disponibilité de l'appareil plein prêt à délivrer une dose de liquide.
- L'état de mouvement du tiroir en cours de cycle.
- L'état de l'appareil en cours de remplissage. etc...

Le couvercle 7 peut être réalisé en une matière transparente permettant une vision directe du remplissage et du vidage de la cavité 8.

Dans la variante représentée par la figure 3, le détecteur 29 reçoit en permanence le signal émis par la l'émetteur 30. L'interruption ou la déviation de ce signal par interposition d'un verre ou d'un gobelet génère un ordre exploité par le bloc de commande 24 qui permet le démarrage d'un cycle.

Le détecteur 29 peut être une cellule photoélectrique, l'émetteur 30 étant une lampe avantageusement munie d'une optique de focalisation.

Le détecteur 29 peut aussi être une cellule sensible aux signaux émis par un émetteur d'ultrasons 30.

## Revendications

1. Appareil distributeur de liquide comprenant un corps 1 relié à un flacon 2 contenant le liquide, une cavite 8 comprise entre ce corps 1 et un couvercle 7, et un tiroir mobile 10, caractérisé :
- en ce que le tiroir 10 est déplacé par le doigt excentré 17 d'un rotor 18 coopérant avec une rainure 16 du tiroir, et entraîné par un motoréducteur 19 mis en route et arrêté par les ordres venant d'un bloc de commande 24 relié à une source d'énergie extérieure par une fiche 26
- en ce que le bloc de commande 24 est piloté par un détecteur 25 sen sible à la proximité de tout corps solide, assurant la mise en route du motoréducteur 19, ainsi que par un autre détecteur 21 activé au passage d'un élément 20 lié de façon excentrée au rotor 18 et assurant l'arrêt dudit motoréducteur lorsque le tiroir 10 est en position basse.

2. Appareil selon la revendication 1 caractérisé en ce que le bloc de commande 24 comprend un microprocesseur et une mémoire programmable.

3. Appareil selon la revendication 2, caractérisé en ce que le microprocesseur et la mémoire sont conçus et programmés pour assurer un arrêt momentané du motoréducteur lorsque le tiroir 10 est sensiblement en position haute.

4. Appareil selon l'une quelconque des revendications 1 à 3, caractéri sé en ce que le microprocesseur et la mémoire sont conçus et programmés pour interdire le démarrage d'un nouveau cycle pendant un laps de temps défini pour assurer un complet remplissage de la cavité calibrée 8.

5. Appareil selon l'une quelconque des revendications 1 à 4, caractérisé en ce que le microprocesseur et la mémoire sont conçus et programmés pour interdire le démarrage d'un nouveau cycle tant que le corps solide qui a précédemment excité le détecteur 25 n'a pas été retiré de sa proximité et qu'une nouvelle présence d'un corps solide n'ait pas été enregistrée par ce même détecteur 25.

6. Appareil selon l'une quelconque des revendications 1 à 5, caractérisé en ce que le microprocesseur et la mémoire sont conçus et programmés pour que le démarrage d'un cycle nécessite l'excitation du détecteur 25 pendant une durée minimale déterminée.

7. Appareil selon l'une quelconque des revendications 1 à 6, caractérisé en ce le tiroir 10 est muni de deux joints d'étancheité 27 et 28 disposés de part et d'autre de la rainure 16 de façon à interdire tout passage de liquide dans la zône compre nant le rotor 18 ainsi que le motoréducteur 19 et tous les accessoires de commande.

8. Appareil selon l'une quelconque des revendications 1 à 7, caractérise en ce que le détecteur 25 est formé par une lampe électrique alimentée par un courant alternatif à fréquence sensiblement plus élevée que la fréquence d'alimentation des ampoules d'éclairage standard, associée et parallèle à une cellule photoélectrique sensible au rayonnement réfléchi par un corps solide mis à proximité.

9. Appareil selon l'une quelconque des revendications 1 à 7, caractérisé en ce que le détecteur 25 est formé par une cellule sensible aux signaux émis par un émetteur d'ultrasons monté parallèlement, et réfléchis par un corps solide mis à proximité.

10. Appareil selon l'une quelconque des revendications 1 à 7, caractérisé en ce que le détecteur 29 est une cellule photoélectrique excitée par une lampe 30 alimentée par un courant alternatif à fréquence sensiblement plus élevée que la fréquence d'alimentation des ampoules d'éclairage standard, dont le faisceau est coupé ou dévié par l'interposition d'un corps solide.

11. Appareil selon l'une quelconque des revendications 1 à 7, caractérisé en ce que le détecteur 29 est une cellule sensible aux signaux émis par un émetteur d'ultrasons 30 dont le faisceau est coupé ou dévié par l'interposition d'un corps solide.

12. Appareil selon l'une quelconque des revendications 1 à 11, caractérisé en ce que le bloc d'alimentation 24 est agencé pour émettre un signal, à chaque cycle, par une prise 31 pouvant être raccordée à un compteur totalisateur.

## Patentansprüche

1. Flüssigkeitszapfanlage bestehend aus einem Körper 1, der mit einer die Flüssigkeit enthaltenden Flasche 2 verbunden ist, einem zwischen diesem Körper 1 und einem Deckel 7 gelegenen Hohlraum 8 und einem beweglichen Schieber 10, dadurch gekennzeichnet, dass:
- der Schieber 10 durch den außermittig sitzenden Finger 17 eines Rotors 18 bewegt wird, welcher mit einer Nut 16 des Schiebers kooperiert und durch einen Getriebemotor 19 angetrieben wird. Dieser Getriebemotor wird durch die Befehle eines Steuerblocks 24 ein- und ausgeschaltet, der wiederum über einen Stecker 26 mit einer Fremdenergiequelle verbunden ist.
- der Steuerblock 24 durch einen Messfühler 25 gesteuert wird, der auf die Nähe eines Festkörpers reagiert und das Einschalten des Getriebemotors 19 gewährleistet, sowie durch einen weiteren Messfühler 21, der beim Durchgang eines Elements 20 aktiviert wird, das außermittig mit dem Rotor 18 verbunden ist und das Ausschalten des besagten Getriebemotors gewährleistet, wenn der Schieber 10 sich in der unteren Position befindet.

2. Anlage gemäß Anspruch 1, dadurch gekennzeichnet, dass der Steuerblock 24 mit einem Mikroprozessor und einem programmierbaren Speicher ausgestattet ist.

3. Anlage gemäß Anspruch 2, dadurch gekennzeichnet, dass der Mikroprozessor und der Speicher so gestaltet und programmiert sind, dass ein kurzfristiges Ausschalten des Getriebemotors gewährleistet wird, wenn der Schieber 10 etwa in der oberen Position ist.

4. Anlage gemäß einem der Ansprüche 1 bis 3, dadurch gekennzeichnet, dass der Mikroprozessor und der Speicher so gestaltet und programmiert sind, dass ein neuer Zyklusstart während einer bestimmten Zeitspanne untersagt wird, um das vollständige Füllen des kalibrierten Hohlraums 8 zu gewährleisten.

5. Anlage gemäß einem der Ansprüche 1 bis 4, dadurch gekennzeichnet, dass der Mikroprozessor und der Speicher so gestaltet und programmiert sind, dass ein neuer Zyklusstart so lange untersagt wird, wie der Festkörper, der zuvor den Messfühler 25 aktiviert hat, nicht aus dessen Nähe entfernt wurde und derselbe Messfühler 25 keine erneute Gegenwart eines Festkörpers festgestellt hat.

6. Anlage gemäß einem der Ansprüche 1 bis 5, dadurch gekennzeichnet, dass der Mikroprozessor und der Speicher so gestaltet und programmiert sind, dass ein Zyklusstart der Ansteuerung des Messfühlers 25 während einer bestimmten Mindestdauer bedarf.

7. Anlage gemäß einem der Ansprüche 1 bis 6, dadurch gekennzeichnet, dass der Schieber 10 mit zwei Dichtungen 27 und 28 ausgestattet ist, die sich beidseitig der Nut 16 befinden, so dass jeglicher Flüssigkeitsdurchsatz in den Bereich des Rotors 18, des Getriebemotors 19 und allen Steuerzubehörs untersagt wird.

8. Anlage gemäß einem der Ansprüche 1 bis 7, dadurch gekennzeichnet, dass der Messfühler 25 aus einer Elektrolampe besteht, die mit einer Fotozelle gekoppelt und parallel geschaltet ist, welche auf die durch einen in der Nähe befindlichen Festkörper zurückgeworfene Strahlung reagiert. Diese Elektrolampe wird durch einen Wechselstrom mit etwas höherer Frequenz als die Speisefrequenz der Standardglühbirnen gespeist.

9. Anlage gemäß einem der Ansprüche 1 bis 7, dadurch gekennzeichnet, dass der Messfühler 25 aus einer Zelle besteht, die auf die von einem parallel geschalteten Ultraschallsender ausgegebenen Signale reagiert, die von einem in der Nähe befindlichen Festkörper zurückgeworfen werden.

10. Anlage gemäß einem der Ansprüche 1 bis 7, dadurch gekennzeichnet, dass der Messfühler 29 eine Fotozelle ist, die durch eine Lampe 30 angeregt wird, deren Strahl durch Einfügung eines Festkörpers unterbrochen oder umgeleitet wird. Die Lampe 30 wird durch einen Wechselstrom mit etwas höherer Frequenz als die Speisefrequenz der Standardglühbirnen gespeist.

11. Anlage gemäß einem der Ansprüche 1 bis 7, dadurch gekennzeichnet, dass der Messfühler 29 eine Zelle ist, die auf die von einem Ultraschallsender 30 ausgegebenen Signale reagiert, deren Strahl durch Einfügung eines Festkörpers unterbrochen oder umgeleitet wird.

12. Anlage gemäß einem der Ansprüche 1 bis 11, dadurch gekennzeichnet, dass der Steuerblock 24 so angeordnet ist, dass er bei jedem Zyklus ein Signal über einen Stecker 31 abgibt, wobei der Stecker an einem Summenzähler angeschlossen werden kann.

## Claims

1. A liquid dispensing apparatus, comprising a unit (1) connected to a liquid container (2), a cavity (8) located between this unit (1) and a lid (7), and a mobile drawer (10), characterised in that:
- the drawer (10) is moved by the by the off-centred axle (17) of a rotor (18) operating with a groove (16) on the drawer, and is driven by a motor-reducer (19), which is started and stopped as ordered by a control block (24) connected to an external power source by a socket (26).
- the control block (24) is controlled by a detector (25) sensitive to the proximity of any solid bodies, ensuring that the motor-reducer (19) is started, and also by another detector (21), which is activated when an element (20) connected off-centre to the rotor (18), ensuring that said motor-reducer is stopped when the drawer (10) is in lower position.

2. Apparatus as claimed in claim 1, characterised in that the control block (24) comprises a microprocessor and a programmable memory.

3. Apparatus as claimed in claim 2, characterised in that the microprocessor and memory are designed and programmed to ensure that the motor-reducer is momentarily stopped when the drawer (10) is markedly in upper position.

4. Apparatus as claimed in any of the claims 1 to 3, characterised in that the microprocessor and memory are designed and programmed to prevent a new cycle from being started for a defined lapse of time, to ensure complete refill of the calibrated cavity (8).

5. Apparatus as claimed in any of the claims 1 to 4, characterised in that the microprocessor and memory are designed and programmed to prevent a new cycle from being started, as long as the solid body which has previously driven the detector (25) has not been removed from within its proximity, and until the new presence of a solid body has not been registered by said detector (25).

6. Apparatus as claimed in any of the claims 1 to 5, characterised in that the microprocessor and memory are designed and programmed so that the start of a cycle requires the detector (25) to be driven for a minimum determined period.

7. Apparatus as claimed in any of the claims 1 to 6, characterised in that the drawer (10) is fitted with two gaskets (27) and (28), located to either side of the groove (15), so as to prevent any liquid from entering the area comprising the rotor (18) as well as the motor-reducer and all control components.

8. Apparatus as claimed in any of the claims 1 to 7, characterised in that the detector (25) is comprised of an electric light, to which alternating electric current is supplied with a frequency markedly higher than the power supply frequency of standard light bulbs, and which is combined and parallel to a photoelectric cell sensitive to the rays reflected by a solid body placed within its proximity.

9. Apparatus as claimed in any of the claims 1 to 7, characterised in that the detector is (25) comprised of a cell sensitive to the signals sent by a parallel-mounted ultrasonic transmitter and reflected by a solid body placed within its proximity.

10. Apparatus as claimed in any of the claims 1 to 7, characterised in that the detector (29) is a photoelectric cell driven by an electric light (30), to which alternating electric current is supplied with a frequency markedly higher than the power supply frequency of standard light bulbs, and whose beam is cut off or diverted by interposition of a solid body.

11. Apparatus as claimed in any of the claims 1 to 7, characterised in that the detector (29) is a cell sensitive to the signals sent by an ultrasonic transmitter (30), whose beam is cut off or diverted by interposition of a solid body.

12. Apparatus as claimed in any of the claims 1 to 11, characterised in that the power supply unit (24) is designed to send a signal, with each cycle, through a connector (31) which can be connected to a counting meter.
